# EUROPÄISCHE PATENTSCHRIFT

(11) **EP 2 327 520 B1**
(45) Veröffentlichungstag und Bekanntmachung des Hinweises auf die Patenterteilung: **27.05.2020**
(21) Anmeldenummer: 09177535.3
(22) Anmeldetag: 30.11.2009
(51) Int. Cl.: B26D 7/08, H02K 23/62, B23Q 5/10, B23Q 5/20, B26D 11/00

(54) **Werkzeugmaschine, Werkzeugmaschinenanordnung sowie Verfahren zum Betreiben einer Werkzeugmaschinenanordnung**
Machine tool, machine tool assembly and method for operating a machine tool assembly
Machine outil, agencement de machine outil ainsi que procédé de fonctionnement d'un agencement de machine outil

(43) Veröffentlichungstag der Anmeldung: 01.06.2011
(73) Patentinhaber: GEISS Aktiengesellschaft, 96145 Sesslach (DE)
(72) Erfinder: Geiss, Manfred, 96145 Seßlach (DE)
(74) Vertreter: Isarpatent

(56) Entgegenhaltungen:
- EP-A2- 1 074 338
- US-A1- 2007 059 116
- "Praxis der Antriebstechnik Band 7 Servo-Antriebe Grundlagen, Eigenschaften, Projektierung", , 31 December 1997 (1997-12-31), pages 1-26, XP55016238, Retrieved from the Internet: URL:http://www.sew-eurodrive.com/download/ pdf/09224602.pdf [retrieved on 2012-01-11]

## Beschreibung

Die vorliegende Erfindung bezieht sich auf eine Werkzeugmaschinenanordnung sowie auf ein Verfahren zum Betreiben einer Werkzeugmaschinenanordnung.

Aus der Druckschrift EP 1 074 338 A2 ist eine Werkzeugmaschine bekannt, wobei eine Ultraschalleinheit in einem Drehlager drehbar gelagert ist, ein Drehantrieb vorgesehen ist und mittels Verdrehung die Stellung einer Klinge der Ultraschalleinheit zu einem zu schneidenden Objekt variiert werden kann.

Insbesondere das Schneiden von dünnen und/oder weichen Materialien, beispielsweise von Kunststoffen, mittels einer mit Ultraschall beaufschlagten Sonotrode, welche eine Schneide umfasst, ist bekannt. Der Ultraschall bewirkt, dass die Schnittkräfte gegenüber einer lediglich in der Schnittrichtung bewegten Schneide erheblich reduziert sind, wodurch ein ungewolltes Verschieben oder Verziehen des zu schneidenden Materials vermieden werden kann. Je nach dem, wie ein entsprechender Schnitt zu führen ist, kann es notwendig sein, die Klinge um ihre Längserstreckungsachse zu drehen, wie beispielsweise in der EP 0 820 841 A1 beschrieben.

Verschiedene Anwendungen erfordern unterschiedliche Sonotroden. Neben den eingangs genannten Sonotroden mit Schneide gibt es auch solche, welche ein Kreismesser umfassen. Das Kreismesser wird während des Schneidevorgangs mit hoher Geschwindigkeit gedreht, wodurch sich beispielsweise hohe Schnittgeschwindigkeiten erreichen lassen.

Als nachteilig hat sich nun die Tatsache herausgestellt, dass keine Werkzeugmaschine zur Verfügung steht, welche den Einsatz von Sonotroden mit Klinge als auch solcher mit einem Kreismesser auf einfache Art und Weise erlaubt.

Es ist daher Aufgabe der vorliegenden Erfindung den vorstehend beschriebenen Nachteil zumindest zu reduzieren.

Erfindungsgemäß wird diese Aufgabe durch eine Werkzeugmaschinenanordnung mit den Merkmalen des Patentanspruchs 1 und/oder durch ein Verfahren zum Betreiben einer Werkzeugmaschinenanordnung mit den Merkmalen des Patentanspruchs 5 gelöst. Demgemäß wird eine Werkzeugmaschinenanordnung mit den Merkmalen des Anspruchs 1 mit einer Werkzeugmaschine und einer Sonotrode bereitgestellt, wobei die Werkzeugmaschine mit einem permanenterregten Drehfeldmotor, mittels welchem die Sonotrode zum Bearbeiten von Material drehbar ist, bereitgestellt wird.

Darüber hinaus wird ein Verfahren zum Betreiben einer Werkzeugmaschinenanordnung, insbesondere der erfindungsgemäßen Werkzeugmaschinenanordnung bereitgestellt, welches folgende Schritte aufweist: Drehen einer ersten Sonotrode mit einer sich entlang einer Achse erstreckenden Schneide um einen Winkel zwischen 0 und 360 Grad um die Achse mittels eines permanenterregten Drehfeldmotors; Verfahren der ersten Sonotrode in einer Ebene im Wesentlichen senkrecht zu der Achse zum Schneiden von Material, wobei die erste Sonotrode entlang der Achse mit Ultraschall beaufschlagt wird; Ersetzen der ersten Sonotrode durch eine zweite Sonotrode mit einem sich im Wesentlichen in der Ebene erstreckenden Kreismesser; und Verfahren der zweiten Sonotrode in der Ebene zum Schneiden des Materials oder von anderem Material, wobei die zweite Sonotrode um die Achse um ein Vielfaches von 360 Grad mittels des Drehfeldmotors gedreht wird.

Die der vorliegenden Erfindung zugrunde liegende Idee liegt in der Erkenntnis, dass sich ein permanenterregter Drehstrommotor auf zweierlei Arten einsetzen lässt: Einerseits kann der permanenterregte Drehstrommotor dazu eingesetzt werden, eine Sonotrode mit einer Klinge bezogen auf das zu schneidende Material genau auszurichten, beispielsweise auf ein 10tel Grad genau, und in dieser Ausrichtung während des Schneidevorgangs zu halten. Andererseits kann der permanenterregte Drehstrommotor dazu dienen eine Sonotrode mit einer Kreisklinge mit hoher Drehzahl zu drehen, beispielsweise mit ungefähr 500 bis 1000 Umdrehungen pro Minute.

Folglich schafft die Erfindung eine Werkzeugmaschine, welche vielseitiger einsetzbar ist und insbesondere den Einsatz von Sonotroden mit einer Klinge als auch solcher mit einem Kreismesser auf einfache Art und Weise erlaubt.

In den Unteransprüchen finden sich vorteilhafte Ausgestaltungen und Verbesserungen der Erfindung.

Unter einer "Sonotrode" ist vorliegend ein Werkzeug zu verstehen, welches durch das Einleiten von hochfrequenten mechanischen Schwingungen (Ultraschall) in dieses in Resonanzschwingungen versetzt werden. Die Sonotrode stellt die Verbindung vom Schwingungserzeuger zum Werkstück her und passt die Ultraschallschwingung an die Bearbeitungsaufgabe an.

Unter einer "Werkzeugmaschine" ist vorliegend jede Art von Vorrichtung zu verstehen, welche dazu eingerichtet ist, eine Relativbewegung zwischen der Ultraschallbearbeitungseinrichtung und dem zu bearbeitenden Material vorzusehen.
Gemäß einer bevorzugten Weiterbildung ist bei der erfindungsgemäß vorgesehenen Werkzeugmaschine vorgesehen, dass die Sonotrode mit dem Drehfeldmotor direkt verbindbar ist. Mit direkt ist vorliegend gemeint, dass keine Unter- oder Übersetzung, beispielsweise in Form eines Getriebes, zwischen dem Drehfeldmotor und der Sonotrode vorgesehen ist. Dadurch kann die Sonotrode auch über lange Zeit spielfrei angetrieben werden.

Gemäß einer bevorzugten Weiterbildung ist bei der erfindungsgemäß vorgesehenen Werkzeugmaschine der Drehfeldmotor als ein Torquemotor ausgebildet. Unter einem Torquemotor ist ein solcher permanenterregter Drehfeldmotor zu verstehen, welcher ein hohes Drehmoment liefert. Torquemotoren weisen vorteilhaft eine kurze Baulänge auf.

Gemäß einer bevorzugten Weiterbildung ist eine Steuereinrichtung vorgesehen, welche dazu eingerichtet ist, in einem ersten Modus den Drehfeldmotor für ein Drehen der Sonotrode um einen Winkel zwischen 0 und 360 Grad anzusteuern und in einem zweiten Modus den Drehfeldmotor für ein Drehen der Sonotrode um ein Vielfaches von 360 Grad anzusteuern. Wird die Werkzeugmaschine also beispielsweise mit einer Sonotrode mit einer Klinge verwendet, so befindet sich die Steuereinrichtung in dem ersten Modus. Wird die Werkzeugmaschine dagegen zusammen mit einer Sonotrode mit einem Kreismesser verwendet, so befindet sich die Steuereinrichtung in dem zweiten Modus.

Die Erfindung wird im Folgenden anhand von Ausführungsbeispielen unter Bezugnahme auf die beiliegenden Figuren der Zeichnung näher erläutert.

Es zeigen:
- Fig. 1: einen Schnitt durch einen Teilbereich einer Werkzeugmaschinenanordnung gemäß einem Ausführungsbeispiel der vorliegenden Erfindung, wobei die Sonotrode mit einer Klinge ausgeführt ist; und
- Fig. 2: teilweise die Werkzeugmaschinenanordnung aus Fig. 1, jedoch mit einer Sonotrode, welche ein Kreismesser aufweist.

In den Figuren bezeichnen dieselben Bezugszeichen gleiche oder funktionsgleiche Komponenten, soweit nichts Gegenteiliges angegeben ist.

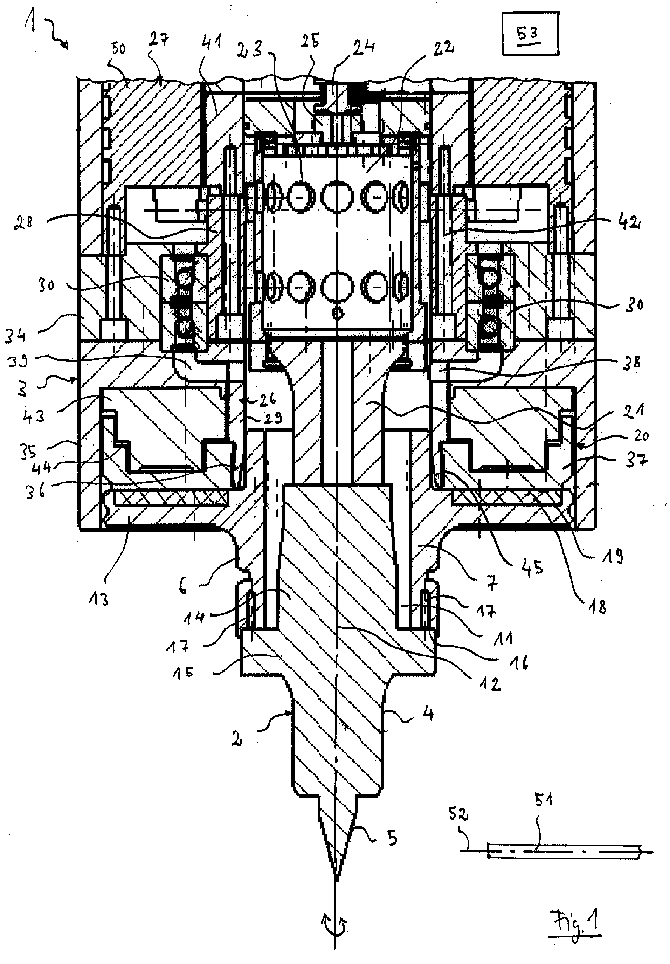

Fig. 1 zeigt einen Schnitt durch einen Teilbereich einer Werkzeugmaschinenanordnung 1 gemäß einem Ausführungsbeispiel der vorliegenden Erfindung.

Die Werkzeugmaschinenanordnung 1 setzt sich aus einer Ultraschallbearbeitungseinrichtung 2 und einer Werkzeugmaschine 3 zusammen, wobei letztere lediglich teilweise dargestellt ist.

Die Ultraschallbearbeitungseinrichtung 2 weist eine Sonotrode 4 auf, welche gemäß dem Ausführungsbeispiel nach Fig. 1 mit einer Klinge 5 zum Schneiden von beispielsweise Kunststoff ausgebildet ist.

Die Ultraschallbearbeitungseinrichtung 2 umfasst ferner eine Aufnahme 6. Die Aufnahme 6 weist einen buchsenförmigen Abschnitt 7 mit einer Durchgangsöffnung 11 auf. An den buchsenförmigen Abschnitt 7 schließt sich ein sich bezogen auf die Längsachse 12 der Sonotrode 4 radial erstreckender Flansch 13 an.

Die Sonotrode 4 erstreckt sich mit einem ersten Abschnitt 14 nach oben in die Durchgangsöffnung 11 hinein und ist an einem sich außerhalb der Durchgangsöffnung 11 nach unten erstreckenden, zweiten Abschnitt 15 an einer unteren Stirnseite 16 des buchsenförmigen Abschnitts 7 der Aufnahme 6 angeflanscht, beispielsweise mittels Schrauben 17. Der zweite Abschnitt 15 der Sonotrode 4 trägt unten die Klinge 5.

An dem Flansch 13 der Aufnahme 6 ist ein Anker 18 fest angebracht. Der Anker 18 ist beispielsweise aus Stahl ausgebildet und weist vorzugsweise eine Ringform auf. Der Anker 18 ist in eine Ausnehmung 19 an der Oberseite des Ankers 18 eingelassen. Der Anker 18 ist dazu vorgesehen, um mit einer an späterer Stelle noch ausführlich beschriebenen Magnetisiereinrichtung 20 der Werkzeugmaschine 3 wechselzuwirken, um ein Lösen der Ultraschallbearbeitungseinrichtung 2 von der Werkzeugmaschine 3 zu ermöglichen bzw. ein kraftschlüssiges Verbinden der Ultraschallbearbeitungseinrichtung 2 mit der Werkzeugmaschine 3 zu gewährleisten. Fig. 1 zeigt die Ultraschallbearbeitungseinrichtung 2 und die Werkzeugmaschine 3 im kraftschlüssig verbundenen Zustand.

An den ersten Abschnitt 14 der Sonotrode 4 schließt sich nach oben hin ein Kopplungsstück 21 der Ultraschallbearbeitungseinrichtung 2 an. Das Kopplungsstück 21 verbindet einen Schwingungserzeuger 22 der Ultraschallbearbeitungseinrichtung 2 mit der Sonotrode 4.

Der Schwingungserzeuger 22 kann eine Vielzahl von Kühlungsöffnungen 23 aufweisen. Der Schwingungserzeuger 22 steht lediglich an seinem oberen Ende über einen in der Längsrichtung 12 beweglichen Zapfen 24, welcher gegen ein Kontaktelement 25 des Schwingungserzeugers 22 entlang der Längsachse 12 federvorgespannt anliegt, mit der Werkzeugmaschine 3 in Kontakt. Via des Zapfens 24 und des Kontaktelements 25 wird elektrische Energie von der Werkzeugmaschine 3 auf den Schwingungserzeuger 22 übertragen, welcher diese in Ultraschallwellen wandelt und diese mittels des Kopplungselements 21 auf die Sonotrode 4 überträgt. Die sich somit ergebende Schwingung der Klinge 5 entlang der Längsachse 12 vereinfacht ein Schneiden von beispielsweise Kunststoff mit dieser.
Der Schwingungserzeuger 22 und das Kopplungselement 21 erstrecken sich nach oben in die Werkzeugmaschine 3 hinein. Insbesondere können sich diese durch eine Hohlspindel 26 der Werkzeugmaschine 3 erstrecken, welche einen permanenterregten Drehstrommotor 27 der Werkzeugmaschine 3 mit einem Rotor 37 der Magnetisierungseinrichtung 20 drehfest verbindet. Vorzugsweise setzt sich die Hohlspindel 26 aus fest miteinander verbundenen Abschnitten 28, 29 zusammen.

Die Abschnitte 28, 29 der Hohlspindel 26 können beispielsweise mittels Kugellager 30 gegenüber Gehäuseteilen 34 und 35 der Werkzeugmaschine 3 gelagert sein. Der Abschnitt 28 ist vorzugsweise mit einem Rotor 41 des Drehstrommotors 27 fest verbunden, beispielsweise mittels Bolzen 42. Der Abschnitt 29 kann an seinem dem Abschnitt 28 gegenüberliegenden, unteren Ende 36 mit dem Rotor 37 fest verbunden sein. Der buchsenförmige Abschnitt 7 der Aufnahme 6 der Ultraschallbearbeitungseinheit 2 kann sich in das untere Ende 36 des Abschnitts 29 hineinerstrecken. Für ein erleichtertes Einführen des buchsenförmigen Abschnitts 7 in das untere Ende 36 des Abschnitts 29 ist dieser vorzugsweise mit einer Einführschräge 45 ausgebildet. Außerdem kann der Abschnitt 29 radiale Öffnungen 38 aufweisen, die mit Kanälen 39 in Verbindung stehen, um somit eine Belüftung der Kugellager 30 zu gewährleisten.

Neben dem Rotor 37, welcher ringförmig und beispielsweise aus Stahl ausgebildet ist, weist die Magnetisiereinrichtung 20 eine Spule 43 auf. Die Spule 43 ist fest mit dem Gehäuseteil 35 verbunden und damit ortsfest gegenüber dem Rotor 37 vorgesehen. In dem in Fig. 1 dargestellten bestromten Zustand der Spule 43 erzeugt diese ein Magnetfeld, welches sowohl den Rotor 37 als auch den Anker 18 der Ultraschallbearbeitungseinrichtung 2 durchdringt. Diese Durchdringung wird noch dadurch verstärkt, dass die Spule 43 teilweise in den Rotor 37 hineinragt. Gemäß dem vorliegenden Ausführungsbeispiel ist daher ein Labyrinthspalt 44 zwischen der Spule 43 und dem Rotor 37 vorgesehen.

Das beschriebene Magnetfeld führt zu einem magnetischen Kraftschluss zwischen dem Rotor 37 und dem Anker 18. Dieser Kraftschluss ist insbesondere geeignet, hohe Drehmomente zwischen dem Drehstrommotor 27 und der Sonotrode 4 zu übertragen.

Wird die Bestromung der Spule 43 unterbrochen, so ist der Kraftschluss zwischen dem Rotor 37 und dem Anker 18 aufgehoben und die Ultraschallbearbeitungseinrichtung 2 kann gegen eine andere, für die neue Bearbeitungsaufgabe geeignete Ultraschallbearbeitungseinrichtung ausgetauscht werden. Nachfolgend wird die Arbeitsweise des Drehstrommotors 27 noch näher erläutert.

Der Rotor 41 des Drehstrommotors 27 ist von einem Stator 50 desselben umgeben. Der Drehstrommotor 27 ist dazu eingerichtet, die Ultraschallbearbeitungseinrichtung 2 um ihre Längsachse 12 zu drehen. Dazu ist der Drehstrommotor 27 bevorzugt als Torquemotor ausgebildet. Das Drehen kann auf zwei unterschiedliche Arten geschehen:

Wird, wie in Fig. 1 dargestellt, eine Sonotrode 4 mit einer Klinge 5 verwendet, gilt es für bestimmte Anwendungen die Klinge 5 bezüglich des zu schneidenden Materials 51 auszurichten. Dies kann ein Verdrehen der Klinge 5 aus einer IstPosition dieser um einen Winkel zwischen 0 und 360 Grad um ihre Längsachse in eine Soll-Position erfordern, was in Fig. 1 durch einen Doppelpfeil angedeutet ist. Dazu wird der Drehstrommotor 27 von einer lediglich schematisch dargestellten Steuereinrichtung 53 zum Drehen der Klinge 5 in die Soll-Position geeignet angesteuert. Gemäß dem vorliegenden Ausführungsbeispiel dreht sich dabei die gesamte Ultraschallbearbeitungseinrichtung 2 um die Längsachse 12, was aber nicht zwingend ist. Anschließend wird die Klinge 5 mittels Verfahrens der Werkzeugmaschinenanordnung 1 in einer Ebene 52 im Wesentlichen senkrecht zur Längsachse 12 bewegt, um Material 51 zu zerschneiden.

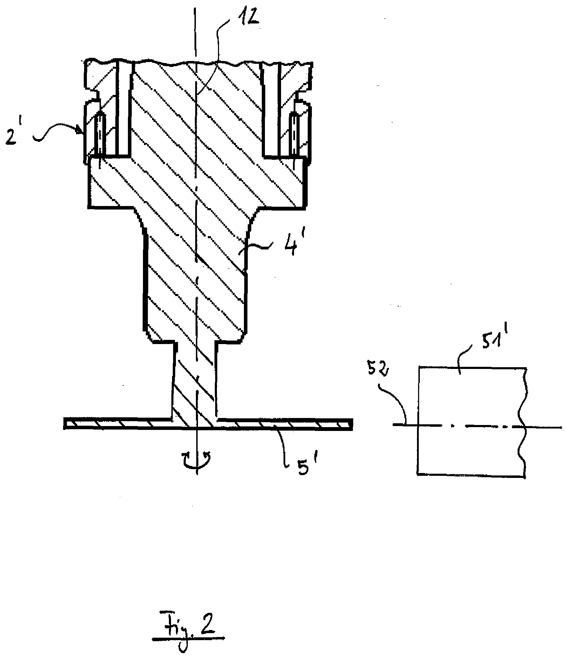

Anhand von Fig. 2 wird nachfolgend das Drehen der zweiten Art erläutert.

Eine neue Bearbeitungsaufgabe kann den Austausch der Ultraschallbearbeitungseinrichtung 2 aus Fig. 1 gegen eine in Fig. 2 dargestellte Ultraschallbearbeitungseinrichtung 2' erfordern, was auf die vorstehend beschriebene Art erfolgen kann, also Unterbrechen der Bestromung der Spule 43 usw..

Die Ultraschallbearbeitungseinrichtung 2' unterscheidet sich von der in Fig. 1 dargestellten Ultraschallbearbeitungseinrichtung 2 dadurch, dass erstere eine Sonotrode 4' mit einem Kreismesser 5' aufweist. Das Kreismesser 5' stellt sich in einer nicht dargestellten Draufsicht kreisförmig dar. Das Kreismesser 5' erstreckt sich im Wesentlichen in der Ebene 52 senkrecht zur Längsachse 12.

Das Kreismesser gilt es mit hoher Geschwindigkeit, beispielsweise mit 500 bis 1000 Umdrehungen pro Minute, um die Längsachse 12 zu drehen, was in Fig. 2 durch einen Doppelpfeil angedeutet ist. Auch dies wird mittels des Drehstrommotors 27 bewerkstelligt, welcher dazu von der Steuereinrichtung 53 entsprechend angesteuert wird. Anschließend wird das Kreismesser 5' mittels Verfahrens der Werkzeugmaschinenanordnung 1 in der Ebene 52 im Wesentlichen senkrecht zur Längsachse 12 bewegt, um Material 51' zu zerschneiden.

Obwohl die vorliegende Erfindung anhand bevorzugter Ausführungsbeispiele vorliegend beschrieben wurde, ist sie darauf nicht beschränkt, sondern auf vielfältige Weise modifizierbar. Die Begriffe "unten" und "oben" wurden vorstehend lediglich verwendet, um ein einfacheres Verständnis der Lage der Komponenten relativ zueinander zu gewährleisten. Nicht dagegen soll damit eine Einschränkung auf die absolute Lage der Komponenten gemeint sein; es hätte genauso gut - bei einer Betrachtung der Figur im Querformat - "links" und "rechts" heißen können.

Außerdem sind die vorstehend für die erfindungsgemäß vorgesehene Werkzeugmaschine beschriebenen Weiterbildungen und Ausführungsbeispiele genauso auch auf die erfindungsgemäße Werkzeugmaschinenanordnung oder das erfindungsgemäße Verfahren anwendbar, und umgekehrt.

## Patentansprüche

1. Werkzeugmaschinenanordnung (1),
mit einer Ultraschallbearbeitungseinrichtung (2) und einer Werkzeugmaschine (3) **dadurch gekennzeichnet, dass** die Werkzeugmaschine einen permanenterregten Drehfeldmotor (27) aufweist und dass die Ultraschallbearbeitungseinrichtung (2) eine Sonotrode (4; 4') aufweist;
wobei mittels des Drehfeldmotors (27) die Sonotrode (4; 4') der Ultraschallbearbeitungseinrichtung (2) zum Bearbeiten von Material (51; 51') drehbar ist;
wobei die Ultraschallbearbeitungseinrichtung (2) einen Schwingungserzeuger (22) und ein Kopplungselement (21) aufweist und mittels des Kopplungselements (21) Ultraschallwellen auf die Sonotrode (4; 4') übertragbar sind;
wobei die Werkzeugmaschine (3) eine Magnetisierungseinrichtung (20) aufweist, welche ausgebildet ist, die Ultraschallbearbeitungseinrichtung (2) mit der Werkzeugmaschine (3) kraftschlüssig austauschbar zu verbinden; und
wobei eine Hohlspindel (26) der Werkzeugmaschine (3) den Drehfeldmotor (27) mit einem Rotor (37) der Magnetisierungseinrichtung (20) drehfest verbindet und die Hohlspindel (26) einen Abschnitt (28) aufweist, der mit einem Rotor (41) des Drehfeldmotors (27) fest verbunden ist, und wobei der Schwingungserzeuger (22) und das Kopplungselement (21) sich durch die Hohlspindel (26) der Werkzeugmaschine (3) erstrecken.

2. Werkzeugmaschinenanordnung nach Anspruch 1,
**dadurch gekennzeichnet,**
**dass** die Sonotrode (4; 4') mit dem Drehfeldmotor (27) direkt verbindbar ist.

3. Werkzeugmaschinenanordnung nach Anspruch 1 oder 2,
**dadurch gekennzeichnet,**
**dass** der Drehfeldmotor (27) als ein Torquemotor ausgebildet ist.

4. Werkzeugmaschinenanordnung nach einem der vorhergehenden Ansprüche,
**dadurch gekennzeichnet,**
**dass** eine Steuereinrichtung (53) vorgesehen ist, welche dazu eingerichtet ist, in einem ersten Modus den Drehfeldmotor (27) für ein Drehen der Sonotrode (4) um einen Winkel zwischen 0 und 360 Grad anzusteuern und in einem zweiten Modus den Drehfeldmotor (27) für ein Drehen einer anderen Sonotrode (4') um ein Vielfaches von 360 Grad anzusteuern.

5. Verfahren zum Betreiben einer Werkzeugmaschinenanordnung (1), insbesondere der Werkzeugmaschinenanordnung nach einem der Ansprüche 1 bis 4, mit folgenden Schritten:
Drehen einer ersten Sonotrode (4) mit einer sich entlang einer Achse (12) erstreckenden Schneide (5) um einen Winkel zwischen 0 und 360 Grad um die Achse (12) mittels eines permanenterregten Drehfeldmotors (27);
Verfahren der ersten Sonotrode (4) in einer Ebene (52) im Wesentlichen senkrecht zu der Achse (12) zum Schneiden von Material (51), wobei die erste Sonotrode (4) entlang der Achse (12) mit Ultraschall beaufschlagt wird;
Ersetzen der ersten Sonotrode (4) durch eine zweite Sonotrode (4') mit einem sich im Wesentlichen in der Ebene (52) erstreckenden Kreismesser (5'); und
Verfahren der zweiten Sonotrode (4') in der Ebene (52) zum Schneiden des Materials (51) oder von anderem Material (51'), wobei die zweite Sonotrode (4') um die Achse (12) um ein Vielfaches von 360 Grad mittels des Drehfeldmotors (27) gedreht wird.

## Claims

1. Machine tool arrangement (1),
having an ultrasonic machining device (2) and a machine tool (3), **characterised in that** the machine tool comprises a permanently excited rotating field motor (27) and that the ultrasonic machining device (2) comprises a sonotrode (4; 4');
wherein, by means of the rotating field motor (27) the sonotrode (4; 4') of the ultrasonic machining device (2) can be rotated to machine material (51; 51');
wherein the ultrasonic machining device (2) comprises an oscillation generator (22) and a coupling element (21) and, by means of the coupling element (21), ultrasound waves can be transmitted to the sonotrode (4; 4');
wherein the machine tool (3) comprises a magnetisation device (20) which is designed to connect the ultrasonic machining device (2) to the machine tool (3) in a non-positive and interchangeable manner; and
wherein a hollow spindle (26) of the machine tool (3) connects the rotating field motor (27) to a rotor (37) of the magnetisation device (20) for conjoint rotation therewith, and the hollow spindle (26) comprises a portion (28) which is fixedly connected to a rotor (41) of the rotating field motor (27), and wherein the oscillation generator (22) and the coupling element (21) extend through the hollow spindle (26) of the machine tool (3).

2. Machine tool arrangement as claimed in claim 1,
**characterised in that**
the sonotrode (4; 4') can be connected directly to the rotating field motor (27).

3. Machine tool arrangement as claimed in claim 1 or 2,
**characterised in that**
the rotating field motor (27) is designed as a torque motor.

4. Machine tool arrangement as claimed in any one of the preceding claims,
**characterised in that**
a control device (53) is provided which is designed, in a first mode, to actuate the rotating field motor (27) for a rotation of the sonotrode (4) by an angle between 0 and 360 degrees and, in a second mode, to actuate the rotating field motor (27) for a rotation of another sonotrode (4') by a multiple of 360 degrees.

5. Method for operating a machine tool arrangement (1), in particular the machine tool arrangement as claimed in any one of claims 1 to 4, comprising the following steps:
rotating a first sonotrode (4) with a cutting edge (5), extending along an axis (12), by an angle between 0 and 360 degrees about the axis (12) by means of a permanently excited rotating field motor (27);
moving the first sonotrode (4) in a plane (52) substantially perpendicular to the axis (12) in order to cut material (51), wherein the first sonotrode (4) is subjected to ultrasound along the axis (12);
replacing the first sonotrode (4) by a second sonotrode (4') with a circular blade (5') extending substantially in the plane (52); and
moving the second sonotrode (4') in the plane (52) in order to cut the material (51) or another material (51'), wherein the second sonotrode (4') is rotated about the axis (12) by a multiple of 360 degrees by means of the rotating field motor (27).

## Revendications

1. Agencement de machine-outil (1),
comportant un dispositif d'usinage par ultrasons (2) et une machine-outil (3), **caractérisé en ce que** la machine-outil comporte un moteur à induction à excitation permanente (27) et **en ce que** le dispositif d'usinage par ultrasons (2) comporte une sonotrode (4 ; 4') ;
dans lequel la sonotrode (4 ; 4') du dispositif d'usinage par ultrasons (2) peut tourner au moyen du moteur à induction (27) afin d'usiner un matériau (51 ; 51') ;
dans lequel le dispositif d'usinage par ultrasons (2) comporte un générateur de vibrations (22) et un élément d'accouplement (21) et les ondes ultrasonores peuvent être transmises à la sonotrode (4 ; 4') au moyen de l'élément d'accouplement (21) ;
dans lequel la machine-outil (3) comporte un dispositif de magnétisation (20), lequel est réalisé pour relier le dispositif d'usinage par ultrasons (2) à la machine-outil (3) par engagement de force de manière amovible ; et dans
lequel une broche creuse (26) de la machine-outil (3) relie le moteur à induction (27) sans rotation possible à un rotor (37) du dispositif de magnétisation (20) et la broche creuse (26) comporte une section (28) reliée fixement à un rotor (41) du moteur à induction (27), et dans lequel le générateur de vibrations (22) et l'élément d'accouplement (21) s'étendent à travers la broche creuse (26) de la machine-outil (3).

2. Agencement de machine-outil selon la revendication 1,
**caractérisé en ce**
**que** la sonotrode (4 ; 4') peut être directement reliée au moteur à induction (27).

3. Agencement de machine-outil selon la revendication 1 ou 2,
**caractérisé en ce**
**que** le moteur à induction (27) est réalisé comme un moteur couple.

4. précédentes,
**caractérisé en ce**
**qu'**un dispositif de commande (53) est prévu, lequel est disposé de façon à commander le moteur à induction (27) pour une rotation de la sonotrode (4) d'un angle entre 0 et 360 degrés dans un premier mode et à commander le moteur à induction (27) pour une rotation d'une autre sonotrode (4') d'un multiple de 360 degrés dans un deuxième mode.

5. Procédé de fonctionnement d'un agencement de machine-outil (1), en particulier de l'agencement de machine-outil selon l'une des revendications 1 à 4, avec les étapes suivantes :
rotation d'une première sonotrode (4) comportant un tranchant (5) s'étendant le long d'un axe (12) d'un angle entre 0 et 360 degrés autour de l'axe (12) au moyen d'un moteur à induction à excitation permanente (27) ;
déplacement de la première sonotrode (4) dans un plan (52) sensiblement perpendiculaire à l'axe (12) afin de couper un matériau (51), dans lequel la première sonotrode (4) se voit appliquer des ultrasons le long de l'axe (12) ;
substitution de la première sonotrode (4) par une deuxième sonotrode (4') comportant un couteau circulaire (5') s'étendant sensiblement dans le plan (52) ; et
déplacement de la deuxième sonotrode (4') dans le plan (52) afin de couper le matériau (51) ou un autre matériau (51'),
dans lequel la deuxième sonotrode (4') est tournée d'un multiple de 360 degrés autour de l'axe (12) au moyen du moteur à induction (27).
